# FASCICULE DE BREVET EUROPEEN

(11) **EP 1 071 229 B1**
(45) Date de publication et mention de la délivrance du brevet: **08.03.2006**
(21) Numéro de dépôt: 00402109.3
(22) Date de dépôt: 24.07.2000
(51) Int. Cl.: H04B 7/26

(54) **Procédé de transmission de communications à travers deux réseaux téléphoniques numériques**
Verfahren zur Kommunikationsübertragung durch zwei digitale Telefonnetzwerke
Method for transmitting communications through two digital phone networks

(30) Priorité: 23.07.1999 FR 9909591
(43) Date de publication de la demande: 24.01.2001
(73) Titulaire: SAGEM S.A., 75116 Paris (FR)
(72) Inventeur: Omgba, Louis-Bede, 95280 Jouy le Moutier (FR); Deliveyne, Pierre, 95800 Cergy le Haut (FR)
(74) Mandataire: Bloch, Gérard

(56) Documents cités:
- EP-A- 0 802 693
- EP-A- 0 903 873
- DE-C- 19 630 048
- US-A- 5 666 366

## Description

La présente invention concerne la transmission de communications téléphoniques à travers deux réseaux téléphoniques numériques, pour, par exemple, transmettre du courrier électronique entre deux terminaux respectifs de ces réseaux.

Un réseau téléphonique numérique présente l'avantage, sur un réseau téléphonique analogique, de transmettre les signaux téléphoniques numériques sans dégradation de qualité, puisque la numérisation permet de s'affranchir de la dégradation du rapport signal/bruit. Pour que les terminaux du réseau puissent échanger des signaux numériques, ils sont tous synchronisés par les centraux du réseau.

Si l'on considère par exemple un réseau numérique local radio à la norme DECT, une base radio émet cycliquement une trame de voies temporelles pour émettre, dans certaines de ces voies, des signaux téléphoniques numérisés vers des combinés et pour recevoir des signaux de ceux-ci dans d'autres voies temporelles. Chaque combiné s'asservit en fréquence sur la fréquence trame de la base et peut donc communiquer avec un autre combiné à travers la base, en numérisant les signaux qu'il émet à travers une voie temporelle de rang déterminé dans la trame.

Pour les communications des combinés DECT avec des terminaux d'un réseau téléphonique numérique extérieur, comme par exemple le réseau numérique à intégration de services RNIS, la base est reliée à une ligne RNIS, servant ainsi de passerelle et constitue un terminal du réseau RNIS. Tout comme le réseau DECT, le réseau RNIS synchronise ses terminaux, mais uniquement si un terminal est actif.

US-5 666 366 enseigne de maintenir la synchronisation d'une trame DECT sur une autre en ajustant la durée de la trame asservie dans une plage temporelle de bits de garde en fin de trame, avec comptage des bits des intervalles de temps de la trame pour repérer l'instant courant.

DE-196 30 048 a un enseignement sensiblement identique à celui du document ci-dessus.

Ces deux documents traitent le problème, limité, du maintien d'une synchronisation, déjà acquise, entre deux réseaux DECT, qui ne nécessite qu'une correction minime à chaque trame.

Dans le cas présent, l'absence de communication sur la ligne RNIS, la base ne reçoit de cette ligne aucun signal. Elle fonctionne alors de façon autonome et émet ses trames radio, de synchronisation des combinés, au rythme d'un circuit d'horloge interne.

Par contre, dès qu'une communication d'un des combinés emprunte la ligne RNIS, celle-ci transmet à la base des signaux de communication à un rythme déterminé. La base passerelle doit alors, d'une part, au niveau de la ligne, s'asservir sur ce rythme RNIS pour recevoir correctement ces signaux et en émettre en retour et, d'autre part, l'émission de la trame locale DECT doit aussi être synchronisée sur ce rythme pour écouler la totalité du flux de signaux RNIS jusqu'aux combinés et, en retour, pour alimenter, au rythme RNIS, la ligne RNIS par le flux de signaux des combinés.

Le circuit d'horloge de la base est donc réglable en fréquence et commandé par un circuit d'asservissement qui détecte tout glissement du rythme de la trame par rapport au rythme RNIS. Le circuit d'horloge, laissé libre de dériver tant que la ligne RNIS est au repos, est brusquement recalé en fréquence à chaque début de communication.

Un tel recalage provoque, dans la trame de la base, un saut temporel qui modifie la durée de la voie temporelle courante du réseau DECT et qui décale d'autant les voies temporelles suivantes, par rapport à ce qui était prévu en l'absence de recalage. Il peut même se produire que la base tronque la trame en cours, en remettant immédiatement à zéro un comptage des voies temporelles, qui gère l'affectation des voies aux divers combinés.

Comme les combinés effectuent un comptage semblable synchronisé sur celui de la base par des signaux de synchronisation qui ne sont transmis qu'épisodiquement par la base, les combinés ne perçoivent pas immédiatement le recalage de la trame de la base et se trouvent donc désynchronisés. Ils ne peuvent plus reconnaître leur voie temporelle tant qu'ils n'ont pas détecté l'arrivée de nouveaux signaux de synchronisation de rythme trame provenant de la base et, entre temps, cela entraîne une perturbation sous forme d'une coupure temporaire des communications, externes et même locales.

La présente invention vise à transmettre des communications à travers deux réseaux téléphoniques numériques, radio ou non, en limitant les perturbations liées au problème de synchronisation de rythmes exposé ci-dessus.

A cet effet, selon le procédé de l'invention pour la transmission de communications à travers deux réseaux téléphoniques numériques, dont un premier réseau présente un rythme déterminé de transmission de signaux de communication et dont le second réseau comporte une base émettant cycliquement, à un rythme réglable, une trame de voies temporelles de communication avec des terminaux, qui se synchronisent sur la trame,
- on saisit le rythme du premier réseau,
- on saisit le rythme de la trame du second réseau,
- on détermine la position de l'instant courant dans la trame,
- on recherche une dérive du rythme de la trame par rapport à une valeur de consigne liée au rythme du premier réseau et, en cas de dérive,
- on règle le rythme de la base si l'instant courant est dans une plage temporelle prédéterminée de synchronisation en fin de trame, sinon on diffère le réglage jusqu'à son entrée dans la plage, procédé étant caractérisé par le fait qu'on utilise toute la dernière voie temporelle de la trame comme plage de synchronisation.

Ainsi, utilisant temporairement toute une voie temporelle comme voie de signalisation, on dispose d'une plage de synchronisation de relativement large bande, qui permet de transmettre en bloc une commande de recalage total et précis, donc rapide, puisqu'il est alors inutile d'effectuer des corrections successives sur plusieurs trames.

La perturbation que va engendrer la correction se trouve limitée dans le temps par le fait que la plage temporelle réservée à la correction est suivie immédiatement d'un début de trame, c'est-à-dire de voies temporelles parfaitement synchronisées et transmettant sans défaut les signaux numériques.

L'invention sera mieux comprise à l'aide de la description suivante d'un mode de mise en oeuvre préféré du procédé de l'invention, en référence au dessin annexé, sur lequel
- la figure 1 représente un réseau téléphonique numérique relié au réseau téléphonique RNIS, et
- la figure 2 représente, en fonction du temps t, des trames temporelles de signaux numériques de communication transmis d'un réseau à l'autre.

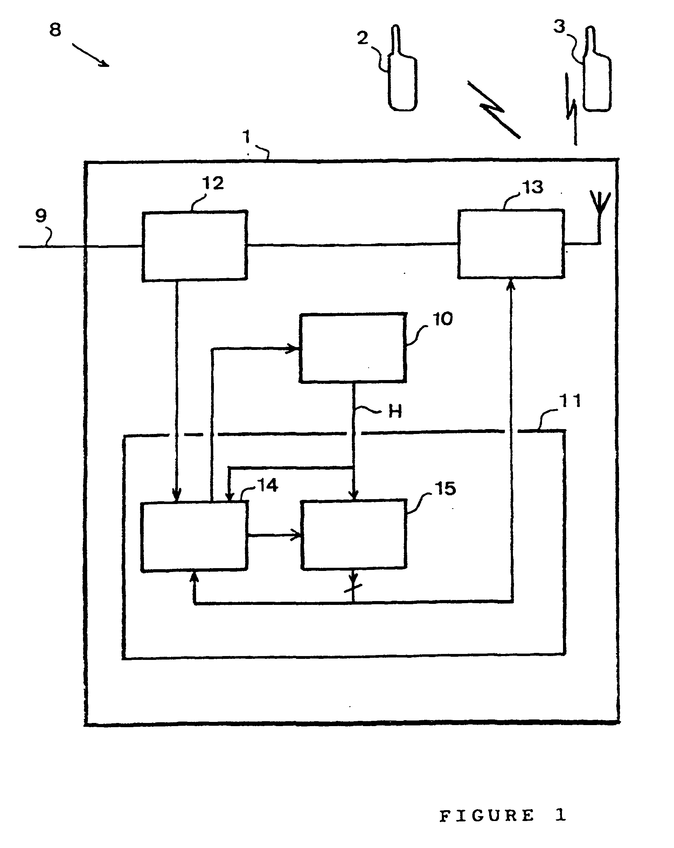

Le réseau téléphonique numérique 8, ici radio et local, de la figure 1 est ici à la norme DECT et comporte une base 1 reliée par radio à des combinés 2, 3 et reliée, par une ligne 9, au réseau téléphonique numérique à intégration de services RNIS.

La base 1 comporte un circuit d'horloge 10, à rythme asservi, relié à une unité centrale 11 qui gère les divers circuits de la base 1. La base 1 est reliée à la ligne 9 par des circuits de liaison 12 qui assurent l'adaptation et la synchronisation ainsi que les échanges de trames de signaux numériques de communication (phonie ou données informatiques) et de signalisation. En outre, les circuits 12 détectent en entrée, par un oscillateur à bascule à verrouillage de phase numérique, sensible aux changements d'état logique en ligne, le rythme de transmission des signaux provenant du RNIS et fournissent, à un circuit 14 de synchronisation base appartenant à l'unité centrale 11, un signal représentant ce rythme. Le circuit de synchronisation 14 commande une entrée d'asservissement de rythme du circuit d'horloge 10, ainsi qu'une entrée de remise à zéro d'un compteur 15 de l'unité centrale 11, qui passe par 24 états différents (0 à 23), avançant au rythme d'un signal d'horloge H fourni par les circuits d'horloge 10. Le compteur 15 commande le séquencement de circuits radio 13 de liaison locale avec les combinés 2, 3, en fournissant une trame cyclique, ici de 24 voies temporelles à la norme DECT. Les circuits 12 et 13 sont reliés par une liaison à multiplexage temporel d'échange de bits de communication, commandée par l'unité centrale 11, pour échanger des octets entre des voies temporelles de la ligne 9 et des voies temporelles de la trame DECT.

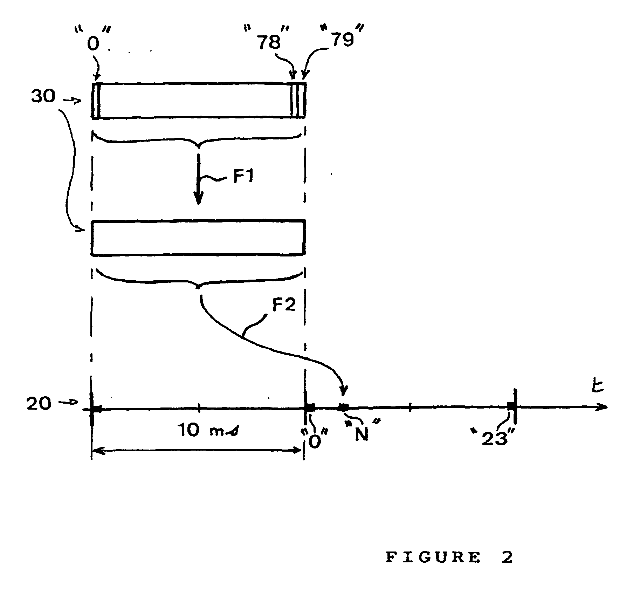

La figure 2 illustre, en fonction du temps t, le format de transmission des données sur la ligne RNIS 9 et dans la trame DECT.

Sur la ligne RNIS 9, un octet est transmis dans une voie temporelle toutes les 125 µs, ce qui correspond à un débit moyen classique de 8 k octets/s. La ligne 9 peut comporter, comme évoqué, une autre ou plusieurs autres voies temporelles, qui n'interviennent pas dans la présente explication. La trame DECT 20 ayant une durée de 10 ms, il faut donc transmettre 80 octets à chaque fois que se présente la voie temporelle DECT prévue pour transmettre une communication entre la base 1 et un combiné 2, 3. De ce fait, les octets provenant de la ligne RNIS 9 sont temporairement stockés (bloc 30 d'octets pointé par la flèche F1) dans un registre non représenté des circuits 12 sur la durée d'une trame DECT 20 et transmis ensuite (flèche F2) en bloc (30) dans une voie temporelle de rang "N" DECT, à un débit instantané accéléré de 24 fois par rapport au débit moyen de 8 k octets/s. Le flux entrant d'octets RNIS est ainsi découpé en tronçons ou blocs de 80 octets, référencés 30, représentant la durée d'une trame DECT 20. Les émissions vers le RNIS 9 depuis un combiné 2, 3 s'effectuent selon les opérations inverses de celles-ci, c'est-à-dire en vidant, d'un octet toutes les 125 µs, un registre tampon alimenté par la voie temporelle DECT considérée.

En l'absence de liaison active avec le RNIS 9, les circuits 12 n'en reçoivent aucun signal de rythme et les circuits d'horloge 10 fonctionnent de façon autonome, avec un oscillateur fonctionnant à un rythme sensiblement égal à celui du RNIS 9 mais qui cependant peut s'en écarter quelque peu, sans que que cela présente un inconvénient, les combinés 2, 3 étant asservis sur la base 1.

Lorsque la liaison RNIS 9 est active, les circuits d'horloge 10 sont asservis en rythme par le RNIS à travers les circuits 12 et 14. Le circuit de synchronisation 14 reçoit en outre le signal d'horloge H de commande du rythme d'avance de compteur 15 issu des circuits d'horloge 10. Le circuit de synchronisation 14 peut ainsi comparer le rythme RNIS et le rythme local du signal H pour détecter un glissement de ce dernier par rapport au rythme maître RNIS. En plus ou à la place du signal d'horloge H, le circuit de synchronisation 14 peut recevoir simplement un signal de demande de synchronisation reçu par l'unité centrale 11. Un tel signal peut par exemple provenir d'un terminal 2, 3, ou bien l'unité centrale 11 détecte elle-même que les transmissions à travers les trames DECT 20 sont de mauvaise qualité ou même interrompues. Cette détection peut être effectuée par un logiciel d'une application, qui détecte une perte de messages de données ou de signalisation ou simplement une dégradation de qualité d'après un code CRC de détection d'erreurs de transmission.

Lorsque le circuit de synchronisation 14 détecte par lui-même que le rythme du signal d'horloge H dérive par rapport au rythme RNIS, ou qu'une commande de synchronisation lui parvient, il doit apporter une correction au réglage des circuits d'horloge 10 pour recaler le rythme du signal d'horloge H sur celui du RNIS. Comme un tel recalage provoque un saut temporel dans la trame DECT 20 en cours, les combinés 2, 3, qui comportent de même un compteur de voies temporelles synchrone avec le compteur 15, perdent leur synchronisation puisque ces compteurs continuent à avancer au rythme initial, avant recalage. En outre, comme dans cet exemple il est prévu une remise à zéro du compteur 15, la perte de synchronisation n'est pas limitée à un simple saut de phase dans une voie temporelle mais correspond à la perte des voies temporelles entre l'instant de la synchronisation et la fin de la trame DECT 20 en cours.

Pour éviter, ou au moins limiter, cet inconvénient,
- on saisit le rythme du réseau RNIS 9, par le circuit 12, comme expliqué,
- on saisit le rythme H de la trame 20 du réseau DECT,
- on détermine la position de l'instant courant dans la trame DECT 20,
- on détecte une dérive du rythme des trames DECT 20 par rapport à une valeur de consigne liée au rythme du réseau RNIS 9 et, en cas de dérive,
- on règle le rythme de la base 1 si l'instant courant est dans une plage temporelle prédéterminée de synchronisation en fin de trame DECT, sinon on diffère le réglage jusqu'à l'entrée dans la plage,
- et on utilise toute la dernière voie temporelle de la trame 20 comme plage de synchronisation.

Dans cet exemple, le circuit de synchronisation 14 reçoit, outre le signal d'horloge H, les sorties du compteur 15 et saisit ainsi le rythme des débuts d'émission des trames DECT 20, correspondant à la période globale du compteur 15, définissant la trame DECT 20.

La détection de la dérive ci-dessus du rythme des trames DECT 20 intervient, comme expliqué plus haut, soit à partir du rythme d'avance du compteur 15 soit par un circuit, externe au circuit 14, qui détecte un défaut de transmission. Comme indiqué, la période de réception de 80 octets provenant du RNIS représente une valeur de consigne de 10 ms sur laquelle doit être asservie la période de la trame DECT 20. En d'autres termes, le rythme d'émission des trames DECT 20, qui est de 100 trames/s (et donc aussi le rythme 24 fois plus élevé des voies temporelles DECT) est lié au rythme RNIS de transmission d'un octet : 8 k octets/s, par un rapport fixe représentant la valeur de consigne.

L'instant courant est saisi, dans cet exemple, de façon quantifiée, à travers le rang de la voie temporelle courante dans sa trame DECT 20. Ce rang peut être déterminé, connaissant le rythme d'émission des trames DECT 20, par comptage au rythme des voies temporelles, c'est-à-dire par lecture du compteur 15.

La plage de synchronisation inclut toute la dernière voie temporelle, de rang 23. Le compteur 15 est alors remis à zéro en même temps que le circuit d'horloge 10 est recalé en fréquence.

En variante, comme ici le rythme du réseau DECT est réglé à une valeur telle que sa trame 20 a une durée, de 10 ms, correspondant à un nombre entier, 80, de voies temporelles du réseau RNIS, on compte cycliquement ces dernières pour déterminer indirectement la position de l'instant courant dans la trame DECT 20. Précisément, un compteur, non représenté, de même période cyclique, 10 ms, que le compteur 15, compte les voies temporelles RNIS de 0 à 79. Le rang de la voie temporelle courante RNIS correspond, au facteur d'échelle près 24/80, au rang de la voie temporelle DECT courante, ou de deux voies successives. Dans ce cas, la plage de synchronisation est définie par exemple par les quatre dernières voies temporelles RNIS. Après détection d'une dérive et prise d'une décision, en début de plage, pour annuler cette dérive, le recalage effectif de l'horloge peut par exemple intervenir pendant les deux dernières voies temporelles RNIS, de rangs 78 et 79, ce qui laisse 250 µs pour effectuer la synchronisation, c'est-à-dire plus de la moitié de la dernière voie temporelle DECT, de rang 23.

D'une façon générale, on utilise temporairement, dans la voie DECT de rang 23, un champ, normalement réservé aux signaux de parole, pour transmettre des signaux de service destinés à commander le recalage d'horloge.

Dans un cas comme dans l'autre, il peut être prévu de différer l'exécution d'une synchronisation de la base 1 dont la demande arriverait en milieu ou fin de la plage de synchronisation, car cette synchronisation risquerait de se terminer dans la première voie temporelle DECT, de rang 0, prévue dans la trame DECT 20 suivante, qui devrait donc être nettement retardée. Cela produirait un saut de phase important dans le rythme d'émission des voies temporelles DECT et compliquerait le recalage correspondant des combinés 2, 3 sur la nouvelle trame DECT 20.

Pour faciliter le recalage en fréquence des combinés 2, 3, la base 1 émet des signaux de synchronisation trame dans une voie temporelle, ici celle de rang 0, de la trame DECT 20. Sinon, les terminaux 2, 3 font glisser, sur la trame reçue 20, une fenêtre temporelle de réception, de durée égale à celle d'une voie temporelle, jusqu'à recevoir correctement les signaux qui leur sont destinés. Comme évoqué ci-dessus, le saut de phase "trame" lors d'une resynchronisation est limité, du fait qu'il intervient en fin de trame DECT 20, si bien que le déplacement de la fenêtre ci-dessus représente une durée et donc une tâche limitées.

Dans cet exemple, on inhibe l'attribution, aux communications, des voies temporelles DECT situées dans la plage de synchronisation, ici donc la seule voie de rang 23, ce qui permet d'éviter d'utiliser celle-ci, qui est fortement perturbée par les recalages de fréquence.

## Revendications

1. Procédé de transmission de communications à travers deux réseaux téléphoniques numériques, dont un premier réseau (9) présente un rythme déterminé de transmission de signaux de communication et dont le second réseau comporte une base (1) émettant cycliquement, à un rythme réglable, une trame (20) de voies temporelles de communication avec des terminaux (2, 3), qui se synchronisent sur la trame (20), procédé dans lequel
- on saisit le rythme du premier réseau (9),
- on saisit le rythme de la trame du second réseau (8),
- on détermine la position de l'instant courant dans la trame (20),
- on recherche une dérive du rythme de la trame (20) par rapport à une valeur de consigne liée au rythme du premier réseau (9) et, en cas de dérive,
- on règle le rythme de la base (1) si l'instant courant est dans une plage temporelle prédéterminée de synchronisation (23) en fin de trame (20), sinon on diffère le réglage jusqu'à son entrée dans la plage (23), procédé **caractérisé par le fait qu'**on utilise toute la dernière voie temporelle de la trame (20) comme plage de synchronisation.

2. Procédé selon la revendication 1, dans lequel, le premier réseau (9) transmettant les communications dans des voies temporelles, on règle le rythme du second réseau (8) à une valeur telle que la trame (20) du second réseau (8) ait une durée correspondant à un nombre entier de voies temporelles du premier réseau (9) et on compte cycliquement ces dernières pour déterminer la position de l'instant courant dans la trame (20) du second réseau (8).

3. Procédé selon l'une des revendications 1 et 2, dans lequel on inhibe l'attribution, aux communications, des voies temporelles (23) du second réseau (8) situées dans la plage de synchronisation.

4. Procédé selon l'une des revendications 1 à 3, dans lequel on émet des signaux de synchronisation trame dans la première voie temporelle de la trame (20) du second réseau (8).

## Claims

1. Method for transmitting communications through two digital telephone networks, the first network (9) having a specific communication signal transmission rate and the second network having a base (1) which cyclically emits, at an adjustable rate, a frame (20) of temporal communication channels, having terminals (2, 3) which are synchronised to the frame (20), wherein
- the rate of the first network (9) is input,
- the rate of the frame of the second network (8) is input,
- the position of the current time in the frame (20) is determined,
- it is checked whether the rate of the frame (20) deviates with respect to a set value linked to the rate of the first network (9) and, if there is a deviation,
- the rate of the base (1) is adjusted if the current time is within a predetermined synchronisation temporal range (23) at the end of the frame (20), otherwise adjustment is postponed until it enters the range (23), the method being **characterised in that** the entire last temporal channel of the frame (20) is used as the synchronisation range.

2. Method as claimed in Claim 1, wherein, since the first network (9) transmits the communications in temporal channels, the rate of the second network (8) is adjusted to a value such that the frame (20) of the second network (8) has a duration corresponding to an integer of temporal channels of the first network (9) and these temporal channels are cyclically counted in order to determine the position of the current time in the frame (20) of the second network (8).

3. Method as claimed in any one of Claims 1 and 2, wherein the temporal channels (23) of the second network (8) which are located within the synchronisation range are prevented from being allocated to the communications.

4. Method as claimed in any one of Claims 1 to 3, wherein frame synchronisation signals are emitted in the first temporal channel of the frame (20) of the second network (8).

## Patentansprüche

1. Verfahren zur Kommunikationsübertragung über zwei digitale Telefonnetze, von denen ein erstes Netz (9) einen vorgegebenen Takt für die Kommunikationssignalübertragung aufweist und das zweite Netz eine Basis (1) aufweist, die zyklisch, mit einem regelbaren Takt einen Pulsrahmen (20) aus Zeitkanälen zur Kommunikation mit Endgeräten (2, 3) sendet, die sich mit dem Pulsrahmen (20) synchronisieren, wobei man bei dem Verfahren
- den Takt des ersten Netzes (9) erfaßt,
- den Takt des Pulsrahmens des zweiten Netzes (8) erfaßt,
- die Position des aktuellen Zeitpunkts in dem Pulsrahmen (20) bestimmt,
- eine Drift des Taktes des Pulsrahmens (20) in Bezug auf einen mit dem Takt des ersten Netzes (9) verbundenen Sollwert sucht, und im Falle einer Drift
- den Takt der Basis (1) regelt, wenn der aktuelle Zeitpunkt in einem vorgegebenen Synchronisationsbereich (23) am Ende des Pulsrahmens (20) liegt, man andernfalls die Regelung bis zu dessen Eintritt in den Bereich (23) verschiebt,
wobei das Verfahren **dadurch gekennzeichnet ist, daß** man den ganzen letzten Zeitkanal des Pulsrahmens (20) als Synchronisationsbereich verwendet.

2. Verfahren nach Anspruch 1, wobei das erste Netz (9) die Kommunikation in Zeitkanälen überträgt und man den Takt des zweiten Netzes (8) auf einen solchen Wert regelt, daß der Pulsrahmen des zweiten Netzes (8) eine Dauer hat, die einer ganzen Zahl von Zeitkanälen des ersten Netzes (9) entspricht, und man diese letzten zyklisch zählt, um die Position des aktuellen Zeitpunkts in dem Pulsrahmen (20) des zweiten Netzes (8) zu bestimmen.

3. Verfahren nach einem der Ansprüche 1 oder 2, wobei man die Zuteilung von solchen Zeitkanälen (23) des zweiten Netzes (8) für die Kommunikation verhindert, die in dem Synchronisationsbereich liegen.

4. Verfahren nach einem der Ansprüche 1 bis 3, wobei man Pulsrahmensynchronisationssignale in dem ersten Zeitkanal des Pulsrahmens (20) des zweiten Netzes (8) sendet.
